# EUROPÄISCHE PATENTSCHRIFT

(11) **EP 0 971 787 B1**
(45) Veröffentlichungstag und Bekanntmachung des Hinweises auf die Patenterteilung: **28.08.2002**
(21) Anmeldenummer: 98917101.2
(22) Anmeldetag: 31.03.1998
(51) Int. Cl.: B01F 13/00, A61C 9/00

(54) **DYNAMISCHER MISCHER FÜR ZAHNÄRZTLICHE ABDRUCKMASSEN**
DYNAMIC MIXER FOR DENTAL IMPRESSION PASTES
MELANGEUR DYNAMIQUE POUR COMPOSITIONS POUR EMPREINTES DENTAIRES

(30) Priorität: 01.04.1997 DE 29705741 U
(43) Veröffentlichungstag der Anmeldung: 19.01.2000
(73) Patentinhaber: Ernst Mühlbauer GmbH & Co.KG, 25870 Norderfriedrichskoog (DE)
(72) Erfinder: HÖRTH, Hans, D-21147 Hamburg (DE); MÜHLBAUER, Wolfgang, D-22609 Hamburg (DE)
(74) Vertreter: Glawe, Delfs, Moll & Partner
(86) Internationale Anmeldenummer: EP9801858
(87) Internationale Veröffentlichungsnummer: WO98043727

(56) Entgegenhaltungen:
- EP-A- 0 333 111
- EP-A- 0 492 412
- DE-C- 4 235 736

## Beschreibung

Die Erfindung betrifft einen dynamischen Mischer für zähe Massen, insbesondere für die Komponenten von zahnärztlichen Abdruckmassen, von denen wenigstens eine zäh ist im Sinne einer honigartigen Konsistenz.

Es ist bekannt (EP-B 492412), an ein Gerät zum Ausbringen der Komponenten einen dynamischen Mischer mit einem Ende anzuschließen, der am anderen Ende eine Ausbringdüse für das Gemisch bildet oder mit einer solchen Ausbringdüse verbunden oder verbindbar ist. Er umfaßt ein Mischrohr und eine darin drehbar gelagerte und antreibbare Mischerwelle, die mit dem Mischrohr einen ringförmigen Mischkanal bildet, dessen radiale Weite in der Größenordnung von 3-5mm liegt. Ferner sind Mischerflügel vorgesehen, die ausschließlich von der Mischerwelle etwa radial bis zur Mischrohrwand vorspringen. Sie haben bei dem bekannten Gerät die Form achsparalleler, ebener Flügel. Sie haben die Aufgabe, die den Mischkanal durchströmenden Komponenten miteinander zu verrühren. Der Mischeffekt dieses bekannten Mischers läßt zu wünschen übrig. Die Aufenthaltsdauer der Komponenten im Mischer muß daher verhältnismäßig groß sein. Dadurch wird die Ausbringleistung begrenzt, und das Mischvolumen, das gleichbedeutend ist mit dem Volumen des pro Verwendungsfall verlorenen Materials, ist groß.

Der Erfindung liegt die Aufgabe zugrunde, den Mischeffekt zu verbessern. Sie erreicht dies durch eine Verringerung der radialen Weite des Mischkanals auf nicht mehr als 2mm.

Der Erfindung liegt die Erkenntnis zugrunde, daß die zähere der beiden Komponenten dazu neigt, an der Oberfläche der Mischerwelle zu verbleiben, sozusagen daran zu haften, ohne in hinreichendem Maße am radialen Masseaustausch teilzunehmen. Wird die radiale Weite in der erfindungsgemäßen Weise verringert, wird der Masseaustausch über eine kritische Schwelle gehoben und der Mischeffekt entscheidend verbessert.

Zu den Mängeln des bekannten Mischers trägt die Form und Anordnung der Mischerflügel bei. Infolge ihrer axialen Ausrichtung neigen sie dazu, von der Umlaufbewegung wenig beeinflußte Zonen zu bilden, die in Umlaufrichtung vor und hinter ihnen liegen. Die dort befindlichen Anteile der zähen Komponente nehmen unzureichend am Austausch teil. Die Erfindung sieht deshalb vor, die Mischerflügel in Umfangsrichtung fließgünstig auszubilden, damit sich keine beruhigten Zonen vor und hinter ihnen bilden. Beispielsweise können die Mischerflügel länglich in Umfangsrichtung sein. Die auf die Umfangsrichtung bezogene Ausrichtung der Mischerflüge ist nicht im Sinne einer exakten Richtungsangabe zu deuten. Vielmehr genügt es, daß die fließgünstige Ausrichtung der Mischerflügel eine in Umfangsrichtung oder quer zur Masseflußrichtung (die von der Axialrichtung abweichen kann) verlaufende Richtungskomponente aufweist. Es soll dadurch vermieden werden, daß die Flügel wesentliche Flächenanteile aufweisen, vor oder hinter denen sich die erwähnten ruhigen Zonen ausbilden können. Z.B. können die Flügel in Umfangsrichtung rautenförmig oder spitzoval oder stromlinienförmig oder in der Art eines Tragprofils ausgebildet sein. Dabei kann es durchaus erwünscht sein, wenn sie auf ihren in entgegengesetzte Axialrichtung weisenden Flanken unterschiedlich auf die Masse einwirken, um eine kräftige Mischbewegung zu veranlassen. Auch Wirbelbildung im Strömungsschatten der Flügel kann beabsichtigt sein.

Es kann zweckmäßig sein, daß die Mischerflügel im Laufe der Mischstrecke in unterschiedlichen Relativrichtungen auf die Masse treffen. Dies kann dadurch bewerkstelligt werden, daß die Mischerflügel in unterschiedlichen Axialbereichen der Mischerwelle daran in unterschiedlicher Richtung angeordnet sind. Statt dessen kann dieses Ziel bei gleichgerichteter Anordnung der Mischerflügel auch dadurch erreicht werden, daß die Querschnittsfläche des Mischkanals in Fließrichtung sich ändert, insbesondere abnimmt. Dadurch beschleunigt sich die Axialbewegung der Masse und damit auch der Winkel der relativen Bewegungsrichtungen der Masse und der Flügel. Zu einer besonders einfachen und zweckmäßigen Form des Mischers gelangt man dann, wenn die Querschnittsverringerung des Mischkanals durch Verringerung des Durchmessers des Mischkanals in Fließrichtung verwirklicht wird. Das Mischrohr und die Mischerwelle sind in diesem Fall vorzugsweise konisch ausgebildet.

Am Mischereingang ist darauf zu achten, daß die Komponenten von einem Auslaß des Masseausbringgeräts nicht zu dem jeweils anderen Auslaß hin verschleppt werden können, damit die Massen in den Auslässen des Ausbringgeräts, die nicht mit dem Mischer ausgewechselt werden, nicht aushärten können. Bei dem eingangs erwähnten, bekannten Gerät ist zu diesem Zweck im Mischer ein Abstreifer vorgesehen, der mit einer Schneidkante an den Öffnungen vorbeistreicht. Dies ist verhältnismäßig aufwendig und hat auch zur Folge, daß sich im Bereich des Abstreifers eine verhältnismäßig voluminöse Kammer im Mischer befindet, die dessen Verlustvolumen vergrößert. Die Erfindung sieht statt dessen vor, daß von den verhältnismäßig weit radial außen liegenden Öffnungen zu dem radial weiter innen liegenden Mischkanal getrennte Kanäle für die verschiedenen Komponenten vorgesehen sind, die deren Kontamination praktisch ausschließen, bis die Komponenten sich im Mischkanal treffen. Diese Kanäle sind in einem Basisteil des Mischers angeordnet, der von einem die Öffnungen und die Kanäle bildenden Füllstück sowie einem die Füllstücke aufnehmenden, mit dem Mischrohr verbundenen Gehäuse gebildet ist. Die Kanäle sind als einfache, vorzugsweise radial verlaufende Ausschnitte im Füllstück ausgebildet.

Die Erfindung wird im folgenden näher unter Bezugnahme auf die Zeichnung erläutert, die ein vorteilhaftes Ausführungsbeispiel veranschaulicht. Darin zeigen:
- Fig. 1: einen Längsschnitt gemäß der in Fig.2 eingezeichneten Schnittlinie und
- Fig. 2: eine Draufsicht auf den Mischer.

Der Mischer, der etwa im Maßstab 2:1 vergrößert dargestellt ist, umfaßt ein Mischrohr 1, das einstückig mit dem Gehäuse 2 eines Basisteils 3 besteht. In dem Gehäuse 2 des Basisteils 3 befindet sich ein Füllstück 4, dessen Wand 5 sich über den größten Teil des Umfangs praktisch spaltfrei bis zum Beginn des Mischrohrs 1 an das Gehäuse 2 anschließt. In der Mitte bildet das Füllstück eine Lagerbuchse 6 für eine Welle 7, die mit einem beispielsweise als Innensechskant 8 ausgebildeten Kupplungsansatz daraus herausschaut.

An zwei gegenüberliegenden Seiten enthält das Füllstück Öffnungen 9, 10, die von Anschlußstutzen 11, 12 eingeschlossenwerden, welche zum Anschluß an die Auslässe des Ausbringgeräts ausgebildet sind. Die Einzelheiten dieses Anschlusses an das Ausbringgerät sind bekannt und bedürfen daher keiner Erläuterung.

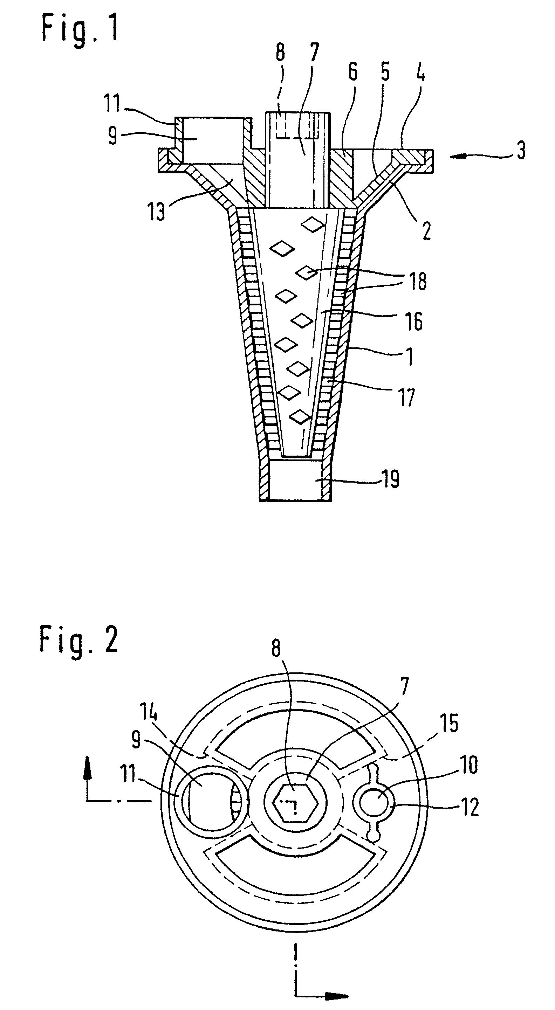

Im Bereich der Öffnungen 9, 10 ist der dem Basisgehäuse 2 zugewandte Teil des Füllstücks 4 mit radialen Einschnitten 13 versehen, deren Flanken 14, 15 gestrichelt in Fig.2 erkennbar sind. Die zu den Öffnungen 9, 10 gehörigen Einschnitte sind voneinander durch die Buchse 6 und Wand 5 voneinander getrennt.
Der zu der Öffnung 10 gehörige Einschnitt ist ebenso ausgeführt wie der zur Öffnung 9 gehörige Einschnitt, der in Fig.1 links erscheint.

Mit der Welle 7 ist die Mischerwelle 16 starr verbunden, die im Mischrohr 1 koaxial angeordnet ist. Sie ist ebenso konisch wie dieses. Der dazwischen eingeschlossene, im Querschnitt ringförmige Mischkanal 17 hat daher eine konstante radiale Weite, die um 1mm liegt. Der innere Durchmesser des Mischrohrs beträgt an seinem weiten Ende etwa 14mm und an seinem engen Ende etwa 6mm.

Auf der Oberfläche der Mischerwelle 16 sind Mischflügel 18 radial vorspringend aufgesetzt, deren Querschnittsform die einer Raute ist, deren längere Achse in Umfangsrichtung verläuft. Ihre radiale Länge ist so bemessen, daß sie praktisch spielfrei an der Innenwand des Mischrohrs 1 anliegen und an dieser Fläche beim Umlauf entlanggleiten. Jede Umfangsreihe von Flügeln enthält am dickeren Ende der Mischerwelle 3 bis 6 Flügel und am dünneren Ende 1 bis 3 Flügel. Ihr Mittenabstand in Umfangsrichtung beträgt innerhalb derselben Flügelreihe 4-12mm. Der Axialabstand benachbarter Flügelreihen, in denen die Flügel jeweils versetzt zueinander angeordnet sind, liegt bei etwa 2-4mm. Der Ausdruck Flügel soll keine bestimmten Formeigenschaften vorgeben. Er ist deshalb auch für beispielsweise zylindrische Formen anwendbar, obgleich gestreckte Formen aus den oben erörterten Gründen bevorzugt werden.

Die von den Öffnungen 9, 10 kommenden Kanäle 13 münden in dem Mischkanal 17. Erst dort können die beiden Komponenten miteinander in Verbindung gelangen. Die Entfernung von dem Beginn des Mischkanals 17 bis zu den Öffnungen 9, 10 und weiter bis in die nicht auswechselbaren Teile des Ausbringgeräts ist groß genug, um eine bis dorthin dringende Kontamination der jeweils anderen Komponente auszuschließen. Die Kanäle 13 sind nicht voluminös. Desgleichen ist der Mischkanal 17 vergleichsweise eng. Das von der Vorrichtung eingeschlossene Verlustvolumen ist daher gering.

Dank der geringen Weite des Mischkanals und der relativ zur Bewegungsrichtung der Masse fließgünstigen Kontur der Flügel 18 ist die Wahrscheinlichkeit der Entstehung von Zonen, die erheblich weniger als andere an der Mischbewegung teilnehmen, gering. Entsprechend gut ist der Mischeffekt. Daher kann man es sich leisten, die Querschnittsgröße des Mischkanals auf etwa den halben Betrag bekannte Geräte zu reduzieren. Die Ausbringdüse 19 kann sich ohne oder mit geringer Durchmesserverringerung anschließen.

Der Bauteil 3 bzw. das Gehäuse 2 desselben kann auf beliebige Weise mit dem zugehörigen Ausbringgerät verbunden werden, beispielsweise mittels eines Bajonettverschlusses.

## Patentansprüche

1. Dynamischer Mischer für zähe Massen, insbesondere für die Komponenten von zahnärztlichen Abdruckmassen, der einerseits mit einem Masseausbringgerät verbindbar und andererseits eine Ausbringdüse (19) für das Gemisch bildet oder damit verbindbar ist und ein Mischrohr (1), eine darin umlaufend antreibbare, mit dem Mischrohr (1) einen ringförmigen Mischkanal (17) bildende Mischerwelle (16) und Mischerflügel (18) umfaßt, die ausschließlich von der Mischerwelle (16) etwa radial zur Mischrohrwand vorspringen, **dadurch gekennzeichnet, daß** die radiale Weite des Mischkanals (17) nicht größer als 2mm ist.

2. Mischer nach Anspruch 1, **dadurch gekennzeichnet, daß** die Mischerflügel (18) in Umfangsrichtung fließgünstig ausgebildet sind.

3. Mischer nach Anspruch 1 oder 2, **dadurch gekennzeichnet, daß** die Mischerflügel (18) länglich in Umfangsrichtung bzw. quer zur Haußtfließrichtung der Masse sind.

4. Mischer nach einem der Ansprüche 1 bis 3, **dadurch gekennzeichnet, daß** die Querschnittsfläche des Mischkanals (17) in Fließrichtung abnimmt.

5. Mischer nach Anspruch 4, **dadurch gekennzeichnet, daß** der Durchmesser des Mischkanals (17) in Fließrichtung abnimmt.

6. Mischer nach einem der Ansprüche 1 bis 5, **dadurch gekennzeichnet, daß** das Mischrohr (1) an einem Basisteil (3) angeordnet ist, das zum Anschluß an Masseauslässe des Masseausbringgeräts bestimmte Öffnungen (9,10), deren radialer Mittenabstand größer als der Radius des Mischkanals (17) ist, und von den Öffnungen (9,10) ausgehende und zum Mischkanal (17) führende Kanäle (13) enthält.

7. Mischer nach Anspruch 6, **dadurch gekennzeichnet, daß** das Basisteil aus einem Füllstück (4), das die Öffnungen (9,10) sowie die Kanäle (13) bildet, sowie einem mit dem Mischrohr (1) verbundenen, das Füllstück (4) einschließenden Gehäuse (2) besteht.

## Claims

1. A dynamic mixer for viscous compounds, in particular for the components of dental impression compounds, which at one end can be connected to a compound applicator and at the other end forms an application nozzle (19) for the mixture or can be connected thereto, and comprises a mixing tube (1), a mixer shaft (16) which can driven to rotate therein and forming with the mixing tube (1) an annular mixing passage (17), and mixer blades (18) which project exclusively from the mixer shaft (16) approximately radially to the mixing tube wall, **characterised in that** the radial width of the mixing passage (17) is not greater than 2 mm.

2. A mixer according to Claim 1, **characterised in that** the mixer blades (18) are formed favourable to flow in the peripheral direction.

3. A mixer according to Claim 1 or 2, **characterised in that** the mixer blades (18) are elongated in the peripheral direction or transverse to the principal flow direction of the compound.

4. A mixer according to any one of Claims 1 to 3, **characterised in that** the cross-sectional area of the mixing passage (17) decreases in the flow direction.

5. A mixer according to Claim 4, **characterised in that** the diameter of the mixing passage (17) decreases in the flow direction.

6. A mixer according to any one of Claims 1 to 5, **characterised in that** the mixing tube (1) is disposed on a base part (3) which contains openings (9,10) intended for connection to compound outlets of the compound applicator, the radial centre-to-centre distance of which is greater than the radius of the mixing passage (17), and including passages (13) extending from the openings (9,10) and leading to the mixing passage (17).

7. A mixer according to Claim 6, **characterised in that** the base part comprises a filling member (4), which forms the openings (9,10) and the passages (13), and a housing (2) connected to the mixing tube (1) and enclosing the filling member (4).

## Revendications

1. Mélangeur dynamique pour pâtes visqueuses, en particulier pour les composants de pâtes dentaires pour empreintes, qui peut être relié d'un côté à un distributeur de pâte et qui de l'autre côté forme une buse de distribution (19) pour le mélange ou peut être relié à celle-ci, et qui comprend un tube de mélange (1), un arbre (16) qui peut être entraîné en rotation à l'intérieur de celui-ci et qui forme avec le tube de mélange (1) un canal de mélange (17) de forme annulaire, ainsi que des ailettes de mélange (18) qui font saillie exclusivement de l'arbre (16) du mélangeur à peu près radialement vers la paroi du tube de mélange, **caractérisé en ce que** l'ouverture radiale du canal de mélange (17) n'est pas supérieure à 2 mm.

2. Mélangeur selon la revendication 1, **caractérisé en ce que** les pales (18) du mélangeur sont réalisées de manière à favoriser l'écoulement dans la direction périphérique.

3. Mélangeur selon la revendication 1 ou 2, **caractérisé en ce que** les pales (18) du mélangeur sont allongées dans la direction périphérique ou transversalement à la direction transversale d'écoulement de la pâte.

4. Mélangeur selon l'une des revendications 1 à 3, **caractérisé en ce que** la surface de la section du canal de mélange (17) diminue dans le sens de l'écoulement.

5. Mélangeur selon la revendication 4, **caractérisé en ce que** le diamètre du canal de mélange (17) diminue dans le sens de l'écoulement.

6. Mélangeur selon l'une des revendications 1 à 5, **caractérisé en ce que** le tube de mélange (1) est disposé sur une base (3) qui, pour son raccord à des sorties du distributeur de pâte, contient des orifices (9, 10) déterminés dont la distance radiale au centre est supérieure au rayon du canal de mélange (17), ainsi que des canaux (13) partant des orifices (9, 10) et menant au canal de mélange (17).

7. Mélangeur selon la revendication 6, **caractérisé en ce que** la base est constituée d'une garniture (4) qui forme les orifices (9, 10) et les canaux (13), ainsi que d'un boîtier (2) relié au tube de mélange (1) et enfermant la pièce de remplissage (4).
